# FASCICULE DE BREVET EUROPEEN

(11) **EP 2 582 922 B1**
(45) Date de publication et mention de la délivrance du brevet: **19.03.2014**
(21) Numéro de dépôt: 11735483.7
(22) Date de dépôt: 10.06.2011
(51) Int. Cl.: F01D 25/16, F02C 7/06, F02C 7/28

(54) **DISPOSITIF DE GUIDAGE ET D'ETANCHEITE A JOINT CARBONE ET A PALIER LISSE INTEGRE POUR UNE TURBOMACHINE**
FÜHRUNGS- UND DICHTUNGSVORRICHTUNG FÜR EINEN TURBINEMOTOR MIT KOHLEDICHTUNG UND INTEGRIERTEM TRAGLAGER
GUIDING AND SEALING DEVICE FOR A TURBINE ENGINE, HAVING A CARBON SEAL AND BUILT-IN JOURNAL BEARING

(30) Priorité: 15.06.2010 FR 1054726
(43) Date de publication de la demande: 24.04.2013
(73) Titulaire: Snecma, 75015 Paris (FR)
(72) Inventeur: GALIVEL, Jean-Pierre, Elie, F-77550 Moissy-Cramayel Cedex (FR)
(74) Mandataire: Ramey, Daniel
(86) Numéro de dépôt international: PCT/FR2011/051335
(87) Numéro de publication internationale: WO 2011/157937

(56) Documents cités:
- EP-A2- 0 127 562
- WO-A1-02/086299
- DE-A1- 3 925 403
- DE-U1- 29 908 918
- US-A- 3 258 199

## Description

La présente invention concerne un dispositif de guidage et d'étanchéité d'un arbre de turbomachine dans un orifice d'un carter traversé par cet arbre, ainsi qu'une boîte d'engrenages comportant un tel dispositif.

Dans une turbomachine, différents équipements, tels que notamment des pompes pour la production d'énergie hydraulique, l'alimentation en carburant, la lubrification, des générateurs électriques pour la production de puissance électrique, etc., sont entraînés en rotation par une boîte d'engrenages reliée à un arbre de la turbomachine.

Chaque équipement comprend un arbre tournant couplé en rotation à un arbre de transmission de la boîte d'engrenages. Cet arbre de transmission porte extérieurement une roue dentée qui est en prise avec un pignon d'entraînement couplé par un train d'engrenages à un arbre de compresseur de la turbomachine.

L'arbre de transmission est guidé en rotation à ses extrémités dans des paliers à roulement dont les bagues internes sont solidaires de l'arbre de transmission et les bagues externes sont fixées sur le carter de la boîte d'engrenages. Une des extrémités de l'arbre de transmission traverse un orifice du carter de la boîte d'engrenages et est couplé en rotation à un arbre tournant d'un équipement.

L'huile qui est injectée sur les paliers de la boîte d'engrenages en vue de leur lubrification se mélange à de l'air, ce qui crée un brouillard d'huile à l'intérieur de la boîte d'engrenages. Afin d'éviter des fuites de ce brouillard d'huile entre l'arbre de transmission et le bord de l'orifice du carter, il est connu de monter des moyens d'étanchéité dans l'orifice entre l'arbre et le carter.

Dans la technique actuelle, ces moyens d'étanchéité sont formés par un joint dynamique du type joint carbone, ce joint comportant une bague solidaire de l'arbre et présentant une face annulaire de frottement sur un anneau en matériau poreux qui est formé de grains de carbone et qui a un faible coefficient de frottement. Cet anneau de carbone est fixé à un porte-grains qui est monté dans un boîtier de support fixé au carter et qui est sollicité axialement vers la bague pour maintenir l'anneau de carbone en appui axial sur la bague. Le joint carbone comprend donc des parties fixes en rotation (le boîtier de support, le porte-grains et l'anneau de carbone) et une partie mobile en rotation (la bague). Le frottement de l'anneau de carbone sur la bague, lors de la rotation de l'arbre de transmission, assure une bonne étanchéité entre l'arbre et le carter. Un example de l'état de la technique le plus proche est décrit dans DE 39 25 403 A1.

Le joint carbone est monté à côté d'un des paliers à roulements précités de la boîte d'engrenages. Les moyens de fixation de la bague externe du palier au carter sont indépendants des moyens de fixation du boîtier de support du joint carbone au carter, ce qui entraîne un encombrement axial et une masse importants de l'ensemble. De plus, les moyens de lubrification et/ou de refroidissement du joint carbone sont distincts de ceux du palier à roulements, ce qui n'est pas économique.

La présente invention a notamment pour but d'apporter une solution simple, efficace et économique à ces problèmes de la technique actuelle.

Elle propose à cet effet un dispositif de guidage et d'étanchéité destiné à être monté dans un orifice d'un carter traversé par un arbre dans une turbomachine, comprenant un joint carbone monté autour de l'arbre dans l'orifice du carter et comportant une bague qui est portée par l'arbre et qui comprend une face annulaire de frottement sur un anneau de carbone qui est monté dans un boîtier de support fixé au carter et qui est sollicité axialement vers la bague, caractérisé en ce que la bague présente une paroi cylindrique qui est centrée et guidée en rotation dans une paroi cylindrique du boîtier de support, de façon à former un palier lisse de guidage de l'arbre.

Selon l'invention, un palier lisse est intégré au joint carbone du dispositif selon l'invention. Ce palier lisse remplace le palier à roulements de la technique antérieure qui peut donc être supprimé. L'intégration du palier lisse au joint carbone permet d'avoir des moyens de support et de fixation communs au joint carbone et au palier, ainsi que des moyens de lubrification et de refroidissement communs au joint carbone et au palier. La combinaison du joint carbone à un palier lisse permet en outre de diminuer le nombre de pièces et la masse du dispositif de guidage et d'étanchéité.

La paroi cylindrique de la bague peut être formée d'une seule pièce avec la bague ou être rapportée et fixée sur cette bague. De la même manière, la paroi cylindrique du boîtier de support peut être formée d'une seule pièce avec le boîtier de support ou être rapportée et fixée sur ce boîtier.

La surface cylindrique externe de la paroi cylindrique de la bague et/ou la surface cylindrique interne de la paroi cylindrique du boîtier de support peuvent être recouvertes d'une couche mince ou d'une frette, la couche mince ou la frette étant réalisée dans un matériau dur et à faible coefficient de frottement.

La surface interne de la paroi cylindrique de la bague peut définir une gorge annulaire débouchant axialement du côté opposé à l'anneau de carbone et dans laquelle est destinée à être injectée de l'huile destinée à dissiper la chaleur produite par le palier lisse et le joint carbone en fonctionnement.

Avantageusement, la surface cylindrique interne de la paroi cylindrique du boîtier de support définit un logement dans lequel sont montés la bague et l'anneau de carbone qui est solidaire d'un porte-grains guidé dans le boîtier de support. Le dispositif selon l'invention est donc relativement compact, ce qui simplifie son montage et son démontage de la turbomachine.

La présente invention concerne également une boîte d'engrenages de turbomachine pour l'entraînement en rotation d'au moins un équipement tournant, caractérisée en ce qu'elle comprend un carter comportant un orifice traversé par un arbre de transmission et un dispositif de guidage et d'étanchéité du type précité, qui est monté autour de l'arbre dans l'orifice du carter.

Avantageusement, l'arbre peut présenter une paroi cylindrique qui est entourée avec jeu par une paroi cylindrique du carter, de façon à former un palier lisse de secours non opérationnel en fonctionnement normal. Ce palier lisse de secours est destiné à assurer le centrage et le guidage temporaires de l'arbre de transmission en cas de rupture du palier lisse du dispositif d'étanchéité. Le jeu radial entre les parois cylindriques de l'arbre et du carter est donc déterminé de façon à ce que ces parois ne coopèrent pas entre elles en fonctionnement normal. Ce palier de secours permet également de maintenir l'arbre de transmission en position radiale lors des opérations de montage et de démontage du dispositif selon l'invention.

L'invention concerne enfin une turbomachine, telle qu'un turboréacteur ou un turbopropulseur, comprenant un dispositif de guidage et d'étanchéité tel que décrit précédemment.

L'invention sera mieux comprise et d'autres détails, avantages et caractéristiques de l'invention apparaîtront à la lecture de la description suivante faite à titre d'exemple non limitatif et en référence aux dessins annexés, dans lesquels :
- la figure 1 est une vue schématique en coupe axiale d'une partie d'une boîte d'engrenages de turbomachine selon la technique antérieure ;
- la figure 2 est une vue à plus grande échelle d'une partie de la figure 1 ;
- la figure 3 est une vue correspondant à la figure 2 et illustrant l'invention
- la figure 4 est une autre vue correspondant à la figure 2 et représentant une variante de réalisation de l'invention.

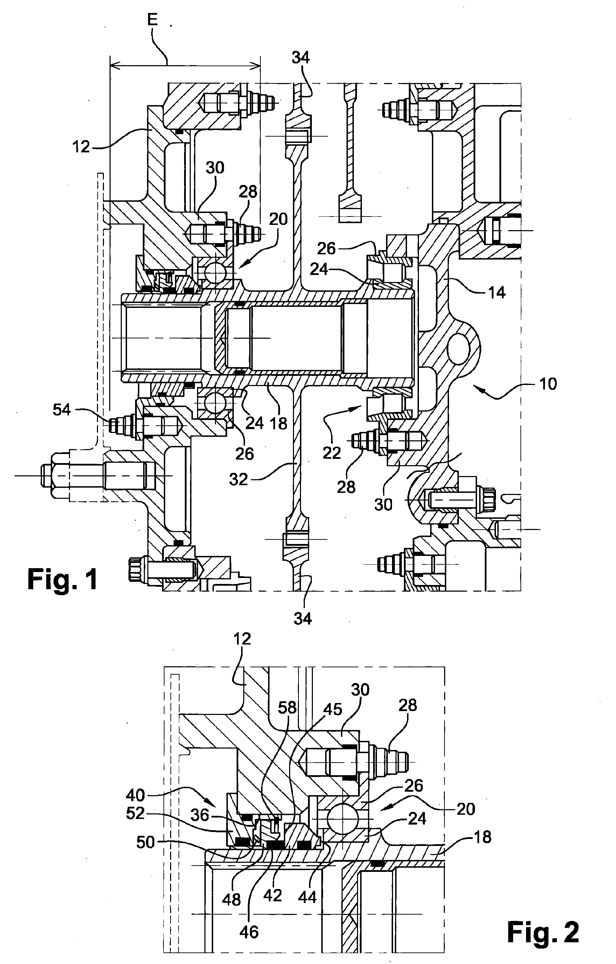

On se réfère tout d'abord aux figures 1 et 2, qui représentent une partie d'une boîte d'engrenages 10 de turbomachine selon la technique antérieure, cette boîte d'engrenages 10 comportant un élément d'entrée (non représenté) relié à un arbre d'entraînement du compresseur de la turbomachine et des pignons d'entraînement d'une pluralité d'équipements, tels que par exemple, une pompe à huile, une pompe hydraulique, une pompe à carburant, un démarreur, un générateur électrique, etc.

La boîte d'engrenages 10 comprend un carter avant 12 et un carter arrière 14 entre lesquels s'étendent une pluralité d'arbres de transmission 18 qui sont destinés à être couplés à des équipements tournants.

L'arbre de transmission 18 visible dans le dessin est guidé en rotation à ses extrémités dans deux paliers à roulement dont l'un 20 est à billes et l'autre 22 est à rouleaux. Les paliers 20, 22 comprennent chacun une bague interne 24 portée par l'arbre de transmission 18 et une bague externe 26 fixée au moyen de vis 28 sur des bossages 30 des carters avant 12 et arrière 14, respectivement. Chaque palier 20, 22 est alimenté en huile par un circuit spécifique de lubrification.

L'arbre de transmission 18 porte une roue dentée 32 agencée entre les deux paliers à roulement 20, 22 et en prise avec des pignons d'entraînement 34.

Comme cela est mieux visible en figure 2, la partie d'extrémité avant de l'arbre de transmission 18 traverse un orifice 36 formé dans le bossage 30 du carter et est centrée et guidée dans cet orifice au moyen du palier à billes 20 précité.

Le palier à billes 20 est engagé dans la partie d'extrémité arrière de l'orifice 36 du carter et un joint d'étanchéité tel qu'un joint carbone 40 est monté autour de l'arbre de transmission 18, dans la partie d'extrémité avant de l'orifice 36. Ce joint carbone 40 empêche des fuites du mélange air/huile contenu dans la boîte d'engrenages, l'huile étant injectée sur les paliers 20, 22 pour leur lubrification, ainsi que sur le joint carbone 40 pour son refroidissement.

Le joint carbone 40 comporte une bague 42 montée sur l'arbre de transmission 18 et comportant à l'arrière des moyens de crabotage 44 coopérant avec des moyens complémentaires de la bague interne 24 du palier 20 pour la solidariser en rotation avec l'arbre 18.

Cette bague 42 comporte à l'avant une face radiale de frottement sur un anneau de carbone 46 solidaire d'un porte-grains 48 qui est sollicité axialement vers la bague 42 par des moyens à ressort 50 montés à l'avant du porte-grains, entre le porte-grains et un boîtier de support 52 fixé au carter 12.

L'anneau de carbone 46 est formé de grains de carbone mélangés à un liant et est imprégné d'un lubrifiant. Cet anneau présente un faible coefficient de frottement dynamique.

Le boîtier de support 52 porte des moyens de verrouillage 58 coopérant avec le porte-grains 48 pour l'empêcher de tourner et pour limiter sa course axiale vers l'arrière. Il comprend en outre une bride annulaire externe de fixation sur le carter avant 12 au moyen de vis 54 (figure 1).

Comme expliqué dans ce qui précède, les moyens de fixation (vis 28 et 54) du palier 20 et du joint carbone 40 sont distincts, ce qui entraîne un encombrement axial E important de l'ensemble formé par le joint carbone et le palier (figure 1). Cette technologie présente en outre d'autres inconvénients décrits plus haut.

L'invention apporte une solution à ces inconvénients grâce à l'intégration d'un palier lisse au joint carbone, ce qui permet de supprimer le palier à roulements de la technique antérieure ainsi que ses moyens de fixation, et se traduit donc par un encombrement axial E' du dispositif de guidage et d'étanchéité formé par le joint carbone et le palier, qui est inférieur à celui E de la technique antérieure.

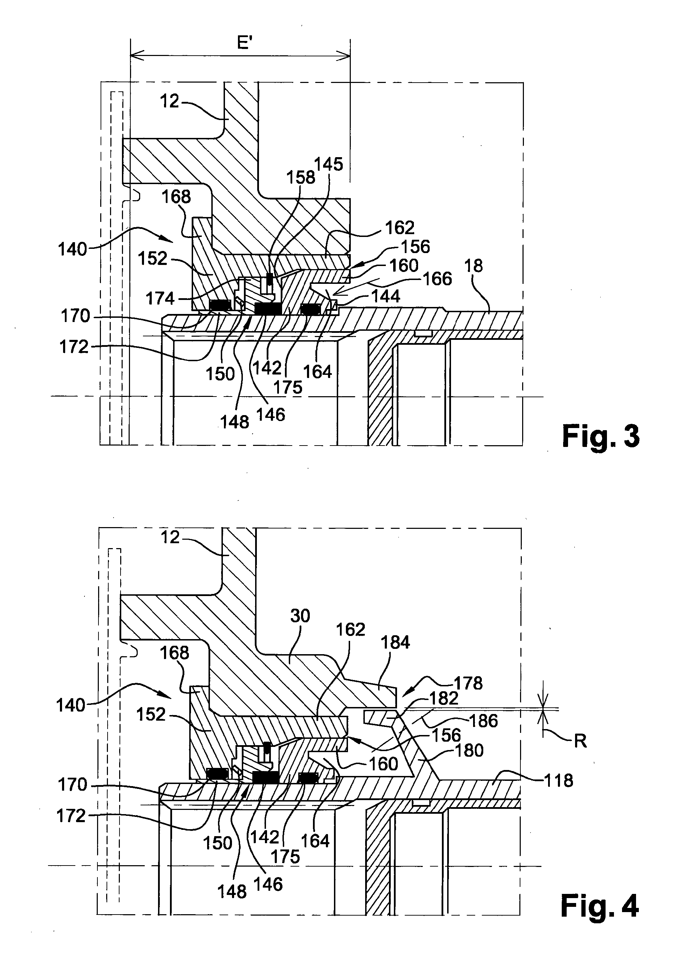

Comme représenté en figure 3, le joint carbone 140 diffère de celui décrit précédemment en ce que sa bague 142 comporte une paroi cylindrique 160 qui est engagée et guidée dans une paroi cylindrique 162 du boîtier de support 152 de façon à former ledit palier lisse 156.

Dans l'exemple représenté, la paroi cylindrique 160 de la bague 142 s'étend vers l'arrière depuis la périphérie externe de la bague. La surface cylindrique interne de cette paroi 160 définit une gorge annulaire 164 dans laquelle est destinée à être injectée de l'huile (flèche 166) pour dissiper la chaleur générée par frottement dans le palier lisse 156 et le joint carbone 140.

La paroi cylindrique 162 du boîtier de support 152 s'étend vers l'aval et entoure les moyens à ressort 150, le porte-grains 148, l'anneau de carbone 146 et la bague 142.

Les surfaces cylindriques en contact des parois cylindriques 160, 162 peuvent être revêtues d'une couche mince d'un matériau dur tel qu'un carbure de chrome ou de tungstène.

La surface cylindrique externe de la paroi 162 coopère avec la surface cylindrique interne de l'orifice 136 du carter 12 pour assurer le centrage du joint carbone 140 dans l'orifice au montage.

Le boîtier de support 152 porte à l'avant une bride annulaire appliquée et fixée par des vis sur la face avant du carter 12.

Le boîtier de support 152 comprend en outre à sa périphérie interne une gorge annulaire débouchant radialement vers l'intérieur et dans laquelle est logé un joint torique 170 d'étanchéité coopérant avec une paroi cylindrique avant 172 du porte-grains 148, qui est reliée à son extrémité arrière à une paroi radiale 174.

Le boîtier de support 152 et la bague 142 sont par exemple réalisés en acier.

Les moyens à ressort 150 sont montés entre une face radiale orientée vers l'arrière du boîtier de support 152 et la face radiale avant de la paroi radiale 174 du porte-grains 148. Ces moyens 150 sont par exemple formés d'une rondelle ondulée.

La course de déplacement axial du porte-grains 148 (qui est par exemple de quelques dixièmes de millimètre environ) est limitée par des moyens de verrouillage 158 formant butée montés en arrière du porte-grains et portés par le boîtier de support 152. Ces moyens de verrouillage 158 immobilisent en rotation le porte-grains 148 dans le boîtier de support 152.

L'anneau de carbone 146 est fixé sur une face radiale arrière du porte-grains 148 et est maintenu en appui axial sur la face radiale avant 145 de la bague 142 lors de la rotation de l'arbre de transmission 18, pour assurer une étanchéité axiale autour de l'arbre, et ce quel que soit le degré d'usure de l'anneau de carbone.

La bague 142 comprend à sa périphérie interne une gorge annulaire débouchant radialement vers l'intérieur et dans laquelle est logé un joint torique 175 d'étanchéité coopérant avec la surface cylindrique externe de l'arbre de transmission 18. La bague 142 comprend en outre des moyens de crabotage 144 coopérant ici avec des moyens complémentaires de l'arbre de transmission 18 pour la solidariser en rotation avec l'arbre.

En fonctionnement, l'arbre de transmission 18 est guidé en rotation par le palier lisse 156 et l'anneau de carbone 146 frotte sur la bague 142 pour limiter les fuites du mélange air/huile de l'intérieur vers l'extérieur de la boîte d'engrenages, à travers l'orifice 36. De l'huile de refroidissement est injectée dans la gorge 164 (flèche 166) pour évacuer les calories produites par frottement dans le palier lisse 156 et le joint carbone 140.

Dans la variante de réalisation de la figure 4, le joint carbone 140 et le palier lisse 156 sont identiques à ceux précédemment décrits et seuls l'arbre de transmission 118 et le carter 12 sont modifiées pour créer un palier lisse 178 de secours non opérationnel en fonctionnement normal.

L'arbre de transmission 118 comporte en arrière du joint carbone 140 et du palier lisse 156 une paroi tronconique 180 reliée à son extrémité avant de plus grand diamètre à une paroi cylindrique 182 qui est entourée avec un jeu radial R par une paroi cylindrique 184 du carter 12, qui s'étend ici vers l'aval depuis le bossage 30 du carter.

Le jeu R (qui est de l'ordre de quelques dixièmes de millimètres environ) est calculé de façon à ce que les parois cylindriques 182, 184 ne coopèrent pas entre elles en fonctionnement normal de la turbomachine. En cas de rupture du palier lisse 156 intégré au joint carbone 140, le palier lisse 178 peut assurer un guidage temporaire de secours de l'arbre de transmission 118. Par ailleurs, lorsque le joint carbone 140 est démonté puis retiré de la boîte d'engrenages, la partie d'extrémité aval de l'arbre de transmission 18 reste maintenue radialement par ce palier de secours.

La paroi tronconique 180 de l'arbre de transmission 118 comprend ici des orifices 186 de passage de l'huile injectée dans la gorge 164 formée par la paroi cylindrique 160 de la bague 142 du joint carbone.

## Revendications

1. Dispositif de guidage et d'étanchéité destiné à être monté dans un orifice (36) d'un carter (12) traversé par un arbre (18) dans une turbomachine, comprenant un joint carbone (140) monté autour de l'arbre dans l'orifice du carter et comportant une bague (142) qui est portée par l'arbre et qui comprend une face annulaire de frottement sur un anneau de carbone (146) qui est monté dans un boîtier de support (152) fixé au carter et qui est sollicité axialement vers la bague, **caractérisé en ce que** la bague présente une paroi cylindrique (160) qui est centrée et guidée en rotation dans une paroi cylindrique (162) du boîtier de support, de façon à former un palier lisse de guidage de l'arbre.

2. Dispositif selon la revendication 1, **caractérisé en ce que** la paroi cylindrique (160) de la bague (142) est formée d'une seule pièce avec la bague ou est rapportée et fixée sur cette bague.

3. Dispositif selon la revendication 1 ou 2, **caractérisé en ce que** la paroi cylindrique (160) de la bague (142) présente une surface cylindrique externe qui est revêtue d'une couche mince ou qui est entourée par une frette, la couche mince ou la frette étant réalisée dans un matériau dur et à faible coefficient de frottement.

4. Dispositif selon l'une des revendications précédentes, **caractérisé en ce que** la surface cylindrique interne de la paroi cylindrique (160) de la bague (142) définit une gorge annulaire (164) débouchant axialement du côté opposé à l'anneau de carbone (146) et dans laquelle est destinée à être injectée de l'huile de refroidissement.

5. Dispositif selon l'une des revendications précédentes, **caractérisé en ce que** la paroi cylindrique (162) du boîtier de support (152) est formée d'une seule pièce avec le boîtier de support ou est rapportée et fixée sur ce boîtier.

6. Dispositif selon l'une des revendications précédentes, **caractérisé en ce que** la paroi cylindrique (162) du boîtier de support (152) présente une surface cylindrique interne qui est revêtue d'une couche mince ou sur laquelle est montée une frette, la couche mince ou la frette étant réalisée dans un matériau dur et à faible coefficient de frottement.

7. Dispositif selon l'une des revendications précédentes, **caractérisé en ce que** la surface cylindrique interne de la paroi cylindrique (162) du boîtier de support (152) définit un logement dans lequel sont montés la bague (142) et l'anneau de carbone (146) qui est solidaire d'un porte-grains (148) guidé dans le boîtier de support.

8. Boîte d'engrenages de turbomachine pour l'entraînement en rotation d'au moins un équipement tournant, **caractérisée en ce qu'**elle comprend un carter (12) comportant un orifice (36) traversé par un arbre de transmission (18) et un dispositif de guidage et d'étanchéité selon l'une des revendications précédentes, qui est monté autour de l'arbre dans l'orifice du carter.

9. Boîte selon la revendication 8, **caractérisée en ce que** l'arbre de transmission (118) porte une paroi cylindrique (182) qui est entourée avec jeu par une paroi cylindrique (184) du carter (12), de façon à former un palier lisse de secours non opérationnel en fonctionnement normal.

10. Turbomachine, telle qu'un turboréacteur ou un turbopropulseur, **caractérisée en ce qu'**elle comprend au moins un dispositif de guidage et d'étanchéité selon l'une des revendications 1 à 7.

## Patentansprüche

1. Führungs- und Dichtungsvorrichtung, die dazu bestimmt ist, in eine Öffnung (36) eines Gehäuses (12), durch welche sich eine Welle (18) erstreckt, in einer Turbomaschine bzw. einem Turbotriebwerk eingesetzt zu werden, enthaltend eine Kohledichtung (140), die um die Welle herum in der Öffnung des Gehäuses gelagert ist und einen Ring (142) enthält, der von der Welle getragen wird und eine ringförmige Reibfläche zur Reibung an einem Kohlenstoffring (146) aufweist, der in einem Trägergehäuse (152) gelagert ist, welches am Gehäuse befestigt ist und axial zum Ring hin beaufschlagt wird, **dadurch gekennzeichnet, dass** der Ring eine zylindrische Wand (160) aufweist, die zentriert ist und drehbar in einer zylindrischen Wand (162) des Trägergehäuses geführt wird, so dass ein Gleitlager zum Führen der Welle gebildet wird.

2. Vorrichtung nach Anspruch 1, **dadurch gekennzeichnet, dass** die zylindrische Wand (160) des Rings (142) aus einem Stück mit dem Ring gebildet ist oder an diesen Ring angesetzt und daran befestigt ist.

3. Vorrichtung nach Anspruch 1 oder 2, **dadurch gekennzeichnet, dass** die zylindrische Wand (160) des Rings (142) eine zylindrische Außenfläche aufweist, die mit einer dünnen Schicht überzogen ist oder von einem Mantelring umgeben wird, wobei die dünne Schicht bzw. der Mantelring aus einem harten Material mit geringem Reibbeiwert ausgebildet ist.

4. Vorrichtung nach einem der vorangehenden Ansprüche, **dadurch gekennzeichnet, dass** die zylindrische Innenfläche der zylindrischen Wand (160) des Rings (142) eine Ringnut (164) definiert, die axial auf der dem Kohlenstoffring (146) entgegengesetzten Seite ausmündet und in welche Kühlöl eingespritzt werden soll.

5. Vorrichtung nach einem der vorangehenden Ansprüche, **dadurch gekennzeichnet, dass** die zylindrische Wand (162) des Trägergehäuses (152) aus einem Stück mit dem Trägergehäuse gebildet ist oder an dieses Trägergehäuse angesetzt und daran befestigt ist.

6. Vorrichtung nach einem der vorangehenden Ansprüche, **dadurch gekennzeichnet, dass** die zylindrische Wand (162) des Trägergehäuses (152) eine zylindrische Innenwand aufweist, die mit einer dünnen Schicht überzogen ist oder auf der ein Mantelring gelagert ist, wobei die dünne Schicht bzw. der Mantelring aus einem harten Material mit geringem Reibbeiwert ausgebildet ist.

7. Vorrichtung nach einem der vorangehenden Ansprüche, **dadurch gekennzeichnet, dass** die zylindrische Innenfläche der zylindrischen Wand (162) des Trägergehäuses (152) eine Aufnahmeausnehmung definiert, in welcher der Ring (142) und der Kohlenstoffring (146) gelagert sind, der fest mit einer Halterung (148) verbunden ist, die in dem Trägergehäuse geführt wird.

8. Getriebekasten einer Turbomaschine bzw. eines Turbotriebwerks für den Drehantrieb zumindest einer drehbaren Einrichtung, **dadurch gekennzeichnet, dass** er ein Gehäuse (12) aufweist, das eine Öffnung (36) enthält, durch welche sich eine Getriebewelle (18) erstreckt, sowie eine Führungs- und Dichtungsvorrichtung nach einem der vorangehenden Ansprüche, die um die Welle in der Öffnung des Gehäuses gelagert ist.

9. Getriebekasten nach Anspruch 8, **dadurch gekennzeichnet, dass** die Getriebewelle (118) eine zylindrische Wand (182) trägt, die von einer zylindrischen Wand (184) des Gehäuses (12) mit Spiel umgeben wird, so dass ein Notgleitlager gebildet wird, das im Normalbetrieb nicht im Einsatz ist.

10. Turbomaschine bzw. Turbinentriebwerk, wie etwa Turbostrahltriebwerk oder Turbopropellertriebwerk, **dadurch gekennzeichnet, dass** sie bzw. es zumindest eine Führungs- und Dichtungsvorrichtung nach einem der Ansprüche 1 bis 7 aufweist.

## Claims

1. A guide and sealing device for mounting in an orifice (36) in a casing (12) through which a shaft (18) passes in a turbine engine, the device comprising a carbon gasket (140) mounted around the shaft in the orifice of the casing and comprising a ring (142) that is carried by the shaft and that has an annular friction face for rubbing against a carbon annulus (146) that is mounted in a support bushing (152) fastened to the casing and that is urged axially towards the ring, the device being **characterized in that** the ring has a cylindrical wall (160) that is centered and guided in rotation in a cylindrical wall (162) of the support bushing so as to form a smooth bearing for guiding the shaft.

2. A device according to claim 1, **characterized in that** the cylindrical wall (160) of the ring (142) is formed as a single piece with the ring or is a fitting that is fastened to the ring.

3. A device according to claim 1 or claim 2, **characterized in that** the cylindrical wall (160) of the ring (142) presents an outer cylindrical surface that is coated in a thin layer or that is surrounded by a hoop, the thin layer or the hoop being made of a material that is hard and has a low coefficient of friction.

4. A device according to any preceding claim, **characterized in that** the inner cylindrical surface of the cylindrical wall (160) of the ring (142) defines an annular groove (164) opening out axially away from the carbon annulus (146) and into which cooling oil is to be injected.

5. A device according to any preceding claim, **characterized in that** the cylindrical wall (162) of the support bushing (152) is made as a single piece with the support bushing or is a fitting that is fastened to the bushing.

6. A device according to any preceding claim, **characterized in that** the cylindrical wall (162) of the support bushing (152) presents an inner cylindrical surface that is coated in a thin layer or that has a hoop mounted thereon, the thin layer or the hoop being made of a material that is hard and has a low coefficient of friction.

7. A device according to any preceding claim, **characterized in that** the inner cylindrical surface of the cylindrical wall (162) of the support bushing (152) defines a housing having mounted therein the ring (142) and the carbon annulus (146) that is secured to a grain-carrier (148) guided in the support bushing.

8. A turbine engine gearbox for providing rotary drive to at least one piece of rotary equipment, the gearbox being **characterized in that** it includes a casing (12) having an orifice (36) through which a transmission shaft (18) passes and a guide and sealing device according to any preceding claim that is mounted around the shaft in the orifice in the casing.

9. A gearbox according to claim 8, **characterized in that** the transmission shaft (118) carries a cylindrical wall (182) that is surrounded with clearance by a cylindrical wall (184) of the casing (12) so as to form an emergency smooth bearing that does not operate in normal operation.

10. A turbine engine, such as a turboprop or a turbojet, **characterized in that** it includes at least one guide and sealing device according to any one of claims 1 to 7.
